Europäisches Patentamt

European Patent Office

Office européen des brevets

(19)

(11) Numéro de publication: **0 031 782**
**A1**

(12) # DEMANDE DE BREVET EUROPEEN

(21) Numéro de dépôt: **80401888.5**

(51) Int. Cl.³: **G 06 F 11/22**

(22) Date de dépôt: **30.12.80**

---

(30) Priorité: **31.12.79 FR 7932092**

(43) Date de publication de la demande: **08.07.81 Bulletin 81/27**

(84) Etats contractants désignés: **DE FR NL**

(71) Demandeur: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **Sery, Jacques, 94, avenue Gambetta, F-75020 Paris (FR)**
Inventeur: **Couture, Serge André Emmanuel, 94, avenue Gambetta, F-75020 Paris (FR)**

(74) Mandataire: **Lincot, Georges, 94, avenue Gambetta, F-75960 Paris Cedex 20 (FR)**

---

(54) **Dispositif permettant de piloter un système informatique à partir d'une console locale et d'une console à distance.**

(57) Dispositif permettant de piloter un système informatique à partir d'une console locale et d'une console à distance.

Ce dispositif de pilotage d'un système informatique (1) à partir d'une console locale (4) et d'une console à distance (5), qui comporte une mémoire (9) reliée au système (1) et aux consoles (4, 5) au moyen d'un dispositif adaptateur (3), comprend un dispositif (10 à 14) de commande et d'enregistrement de changement de mode de contrôle, disposé entre les dispositifs (9 et 3) et qui valide la décision du changement de mode.

Application notamment aux systèmes de télémaintenance de périphériques d'ordinateur.

- 1 -

DISPOSITIF PERMETTANT DE PILOTER UN SYSTEME INFORMATIQUE A PARTIR D'UNE CONSOLE LOCALE ET D'UNE CONSOLE A DISTANCE.

La présente invention concerne un dispositif permettant de piloter un système informatique par transmission de messages entre le système et une console locale ou au moins une console à distance, notamment pour la télémaintenance du système. La présente invention comprend principalement un dispositif de mémoire de messages relié d'une part au système et d'autre part aux diverses consoles par l'intermédiaire d'un dispositif adaptateur.

Dans la structure classique des systèmes informatiques la maintenance et la télémaintenance étaient assurées par conversation entre le centre de maintenance et l'opérateur de la console locale. Lorsque l'opérateur de la console locale détecte un problème, soit un défaut, soit une erreur se produisant de quelque nature que ce soit, le dispositif de liaison agit comme un commutateur mécanique qui, une fois positionné, ne permet plus qu'une liaison fixe, parfaitement définie, avec seulement l'une des consoles, sans possibilité d'une prise de décision par l'opérateur de la console à distance reliée au dispositif adaptateur par une liaison téléphonique.

Outre le fait que le système informatique ne pouvait pas être contrôlé à partir d'une telle console à distance, l'ensemble devait fonctionner à la vitesse la plus lente des vitesses de transmission entre le dispositif adaptateur et la console locale et ce dispositif et la console à distance. Par ailleurs, il n'y avait pas de possibilité d'affichage en clair sur les deux consoles simultanément.

C'est pourquoi la présente invention a pour objet d'indiquer un dispositif de pilotage d'un système informatique à partir de plusieurs consoles, notamment dans le but de la télémaintenance, avec affichage des divers modes de contrôle sur toutes les consoles simultanément et possibilité d'intervention à partir de n'importe quelle console, sans limitation due à la vitesse de transmission entre telle ou telle console, la décision de mode de travail avec les consoles devant être prise en outre à un niveau hiérarchique plus élevé, que dans le cas de l'art antérieur.

Ce problème est résolu conformément à l'invention dans un dispositif du type décrit plus haut, grâce au fait que le dispositif de pilotage du système informatique comprend un dispositif de commande et d'enregistrement de changement de mode de contrôle de télémaintenancne, qui est disposé entre le dispositif de mémoire et le dispositif adaptateur pour valider la décision du changement du mode de télémaintenance, avec tri des informations à distribuer entre les consoles et pour afficher en clair le mode de travail de la console maître au niveau des différentes consoles. Selon l'invention, le dispositif de commande et d'enregistrement de changement du mode de contrôle comprend des dispositifs respectifs de dialogue avec les différentes consoles, branchés entre la mémoire de messages et le dispositif adaptateur. En outre, il est prévu un dispositif de reconnaissance d'ordres de connexion / déconnexion de la console à distance, branché entre le dispositif de dialogue avec la console locale et le dispositif adaptateur. Il est en outre prévu un changement de mode, l'affichage de messages de mode et le dialogue direct entre les consoles, dont les entrées sont reliées aux sorties du dispositif de reconnaissance d'ordres de connexion / déconnexion, qui est également raccordé aux dispositifs de dialogue avec les diverses consoles. Enfin, le dispositif selon l'invention comporte en outre un dispositif de reconnaissance d'ordres de changement de mode, raccordé au dispositif permettant le changement de mode, l'affichage de messages de mode et le dialogue direct entre les consoles, et branché entre le dispositif de dialogue avec la console locale et le dispositif adaptateur.

Comme on le verra de façon plus détaillée dans la description donnée ci-après, une telle structure fournie par le dispositif conforme à l'invention permet une télémaintenance parfaite du système à partir d'une console à distance, avec des vitesses différentes possibles pour la transmission aux diverses consoles et un affichage simultané du mode de fonctionnement et de contrôle sur ces dernières.

Ainsi, le dispositif selon l'invention fournit de nouvelles possibilités avantageuses tant du point de vue fonctionnement avec un télécontrôle perfectionné, que du point de vue souplesse d'utilisation grâce au niveau hiérarchique plus élevé de prise de décisions.

A titre d'exemple, on a décrit ci-dessous et illustré schématiquement aux dessins annexés une forme de réalisation préférée du dispositif selon l'invention.

La figure 1 montre de façon très schématique la structure de l'ensemble dans lequel s'insère le dispositif selon l'invention.

Les figures 2 à 12 montrent de façon détaillée le dispositif selon l'invention dans ses différents modes de fonctionnement, pour lesquels on a indiqué les interconnexions, présentes entre les différentes parties du dispositif et qui sont réalisées sous la forme de liens actifs en traits pleins ou de liens inactifs en traits formés de tirets.

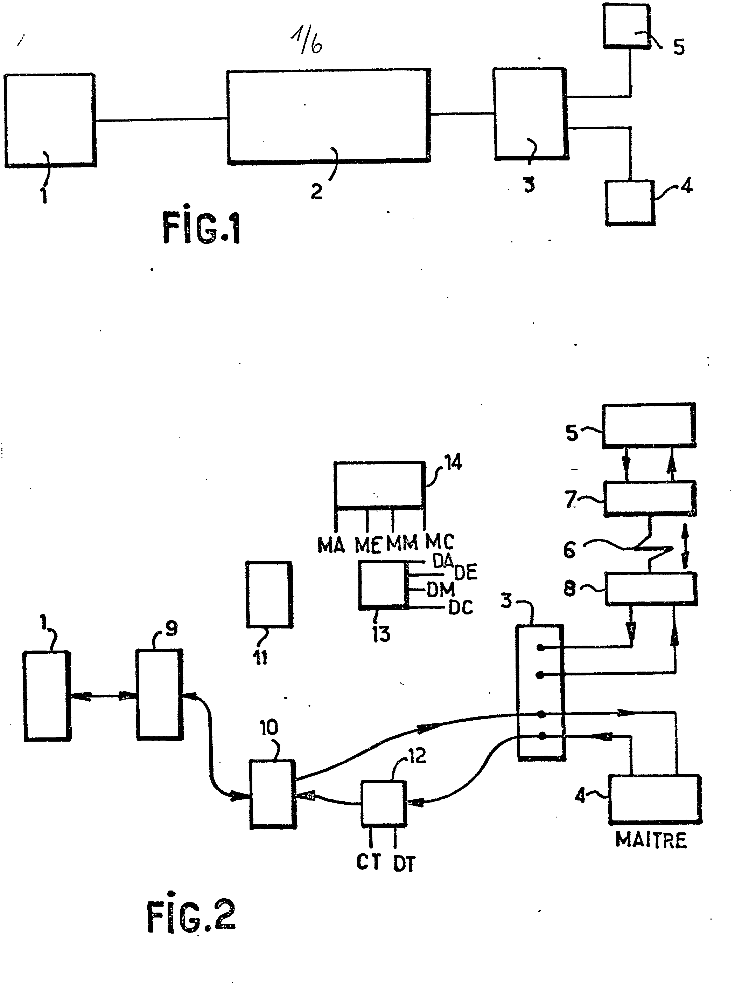

Sur la figure 1, on voit que le système informatique 1, par exemple un processeur central, est relié par le dispositif 2, conforme à l'invention, de commande, de traitement et d'enregistrement de changement du mode de contrôle, à un dispositif adaptateur 3 relié à diverses consoles telles que 4 et 5.

On va maintenant expliciter en détails la structure du dispositif 2 et son mode de fonctionnement, en se référant aux différentes figures 2 à 12.

Le dispositif conforme à l'invention (dispositif 2 sur la figure 1) est disposé entre le système informatique 1 et le dispositif adaptateur 3. Il permet le pilotage du système 1 à partir d'une console locale 4 ou d'une console à distance 5 connectée par l'intermédiaire d'un réseau commuté, formé d'une ligne téléphonique 6 reliée par des modems 7, 8 à la console et au dispositif adaptateur 3. Le dispositif selon l'invention comprend une mémoire-tampon 9 de messages, deux dispositifs 10, 11, permettant le dialogue avec une console, un dispositif 12 permettant la reconnaissance des ordres de connexion / déconnexion de la console à distance 5, un dispositif 13 permettant la détection des ordres de changement de mode de contrôle et un dispositif 14 permettant le changement de mode et l'affichage des messages de modes en clair sur les consoles.

En outre, le dispositif adaptateur 3 permet en particulier le passage d'une interface parallèle à une interface série (Interface CCITT).

Ces différents dispositifs sont interconnectés entre eux de la manière suivante : le système 1 est relié à la mémoire 9 raccordée aux dispositifs 10, 11 permettant le dialogue avec les consoles 4 et 5 par l'intermédiaire du dispositif adaptateur 3. Ce dernier est raccordé au dispositif 10 par l'intermédiaire d'un dispositif 12 de reconnaissance d'ordres de connexion / déconnexion de la console 5, et au dispositif 11 par l'intermédiaire d'un dispositif 13 permettant la détection des ordres de changement de mode de contrôle, et d'un dispositif 14 permettant le changement de mode et l'affichage de messages de mode en clair sur les consoles. De plus, le dispositif 13 est interconnecté au dispositif 14 lui-même relié au dispositif 12.

On va décrire ci-après les divers modes de fonctionnement permis par le dispositif selon l'invention.

1 - MODE NORMAL (figure 2).

Le système est piloté à partir de la console locale 4, qui est donc "maître", par l'intermédiaire des liens indiqués sur la figure 2. Les dispositifs 11, 13, 14 sont alors inactifs. Les messages venant du système sont d'abord rangés dans la mémoire 9, puis envoyés à la console locale 4 par l'intermédiaire du dispositif 10. Les messages tapés au clavier par l'opérateur transitant par les dispositifs 12 et 10, sont rangés dans la mémoire 9, puis sont envoyés au système 1. Le dispositif 12 est à l'écoute et détecte éventuellement une demande de connexion de la console à distance 5 (par sa sortie CT).

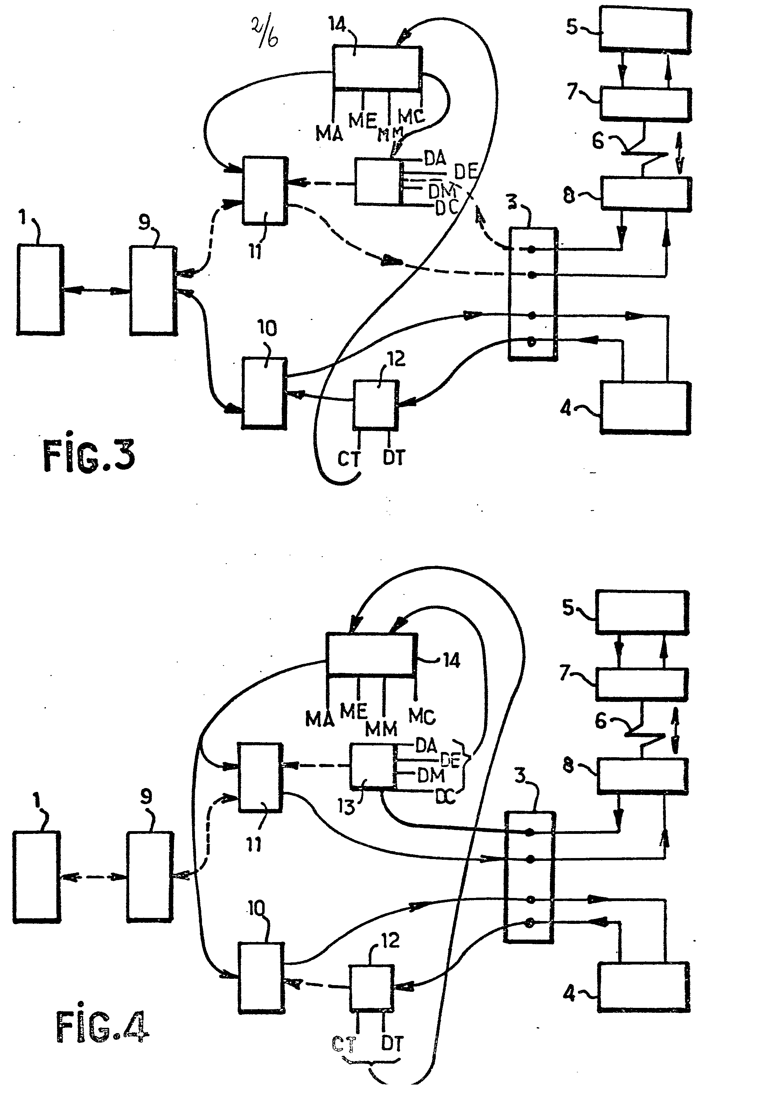

2 - MODE DE CONNEXION DE LA CONSOLE A DISTANCE (figure 3)

Dès que le dispositif 12 détecte une demande de connexion de la console à distance 5, sa sortie CT est activée et notifie au dispositif 14 une demande de connexion. Par l'intermédiaire du dispositif 11, les liens indiqués en pointillés sur la figure 3 sont établis (connexion) et simultanément le dispositif 14 indique au dispositif 13 une demande de passage au mode dénommé "AUTOTEST" (pour tester la ligne - sortie DA validée -).

3 - AFFICHAGE DES MODES DE FONCTIONNEMENT (figure 4).

A partir du moment où la console à distance est connectée, le dispositif 13 est actif et est à l'écoute des demandes de changement de mode venant de la console 5. On pourrait également concevoir que les demandes de changement de mode soient issues de la console locale 4. Dès qu'une des sorties du dispositif 13 est active (sorties DA, DE, DC, DM), une demande de changement de mode est notifiée au dispositif 14. Ce dispositif 14 délivre un message indiquant le nouveau mode et l'envoie simultanément aux deux consoles 4, 5 par l'intermédiaire des dispositifs 10 et 11. Puis l'une des sorties du dispositif 14 est validée. Sur les figures, les symboles MA, ME, MM et MC des sorties du dispositif 14 désignent respectivement :

    MA : mode "Autotest"
    ME : mode "Ecoute"
    MM : mode "Maître"
    MC : mode "Conversationnel".

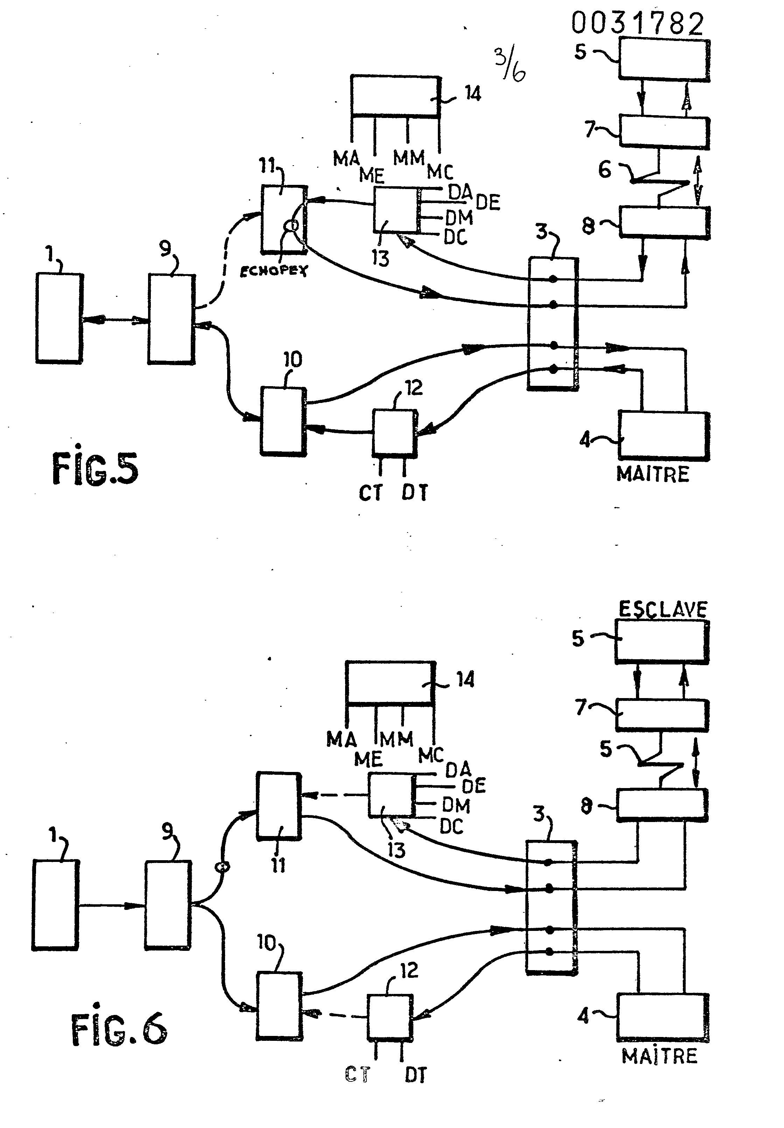

4 - MODE "AUTOTEST" (figure 5).

Ce mode permet le contrôle de la connexion de la console à distance 5 et est indépendant du travail du système, c'est-à-dire qu'aucune donnée n'entre, ni ne sort du système. Chaque caractère tapé au clavier de la console 5 est envoyé au dispositif 11. Ce dispositif 11 renvoie le caractère à la console à distance 5 (fonction "Echoplex"). Ainsi l'opérateur de la console 5 peut vérifier le bon fonctionnement des liaisons à travers le réseau commuté (6, 7, 8). Dans ce mode, la console locale 4 est "maître" et le mode de fonctionnement est le mode 2.

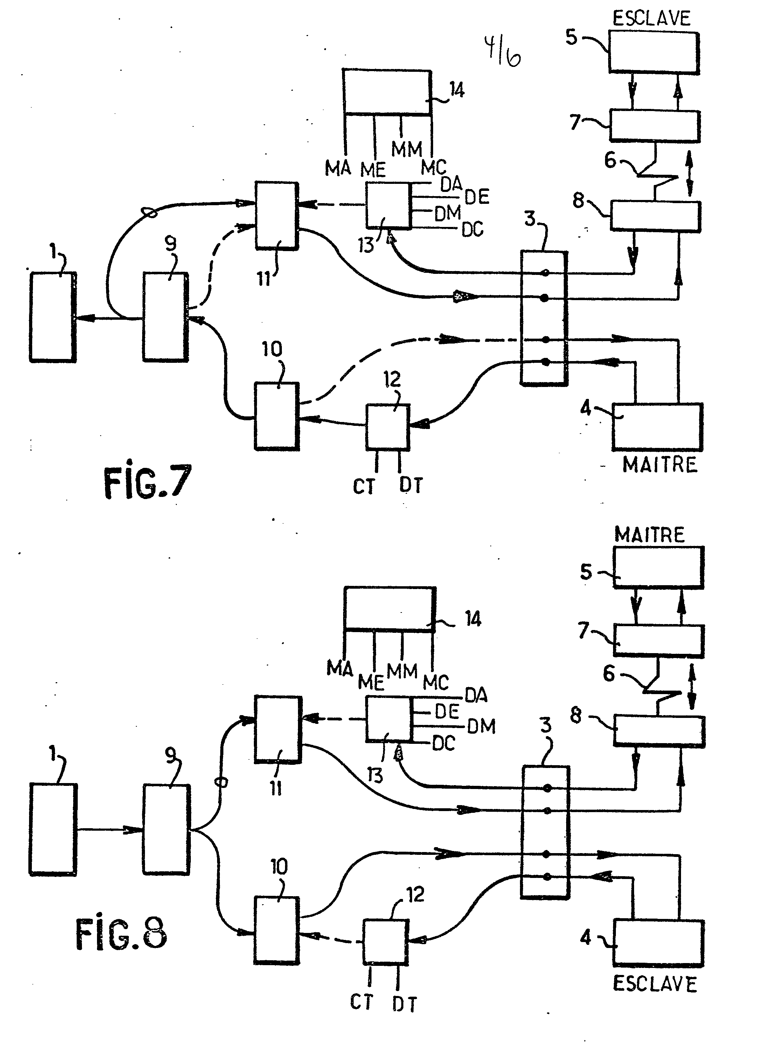

5 - MODE "ECOUTE" (figures 6 et 7).

Dans ce mode, la console locale 4 est "maître" et la console à distance 5 est "esclave".

Dans le cas de messages venant du système (figure 6), ces derniers sont mémorisés dans la mémoire 9, puis envoyés simultanément aux deux consoles 4, 5 par l'intermédiaire des dispositifs 10 et 11. Les vitesses de transmission peuvent être différentes pour les deux consoles et avoir par exemple, pour valeur :

- pour la console locale : 9600 bauds
- pour la console à distance : 300 bauds
  (limitation due au réseau commuté).

Dans le cas de messages tapés au clavier par l'opérateur (figure 7), la fonction "Entrée à partir du clavier" est autorisée uniquement à partir de la console "maître", c'est-à-dire la console locale 4. Le message tapé au clavier est dirigé par la mémoire 9 par l'intermédiaire du dispositif 10, puis simultanément est transféré au système 1 et envoyé à la console à distance 5 par l'intermédiaire du dispositif 11. L'opérateur de la console à distance a donc la copie exacte des informations affichées sur la console locale 4.

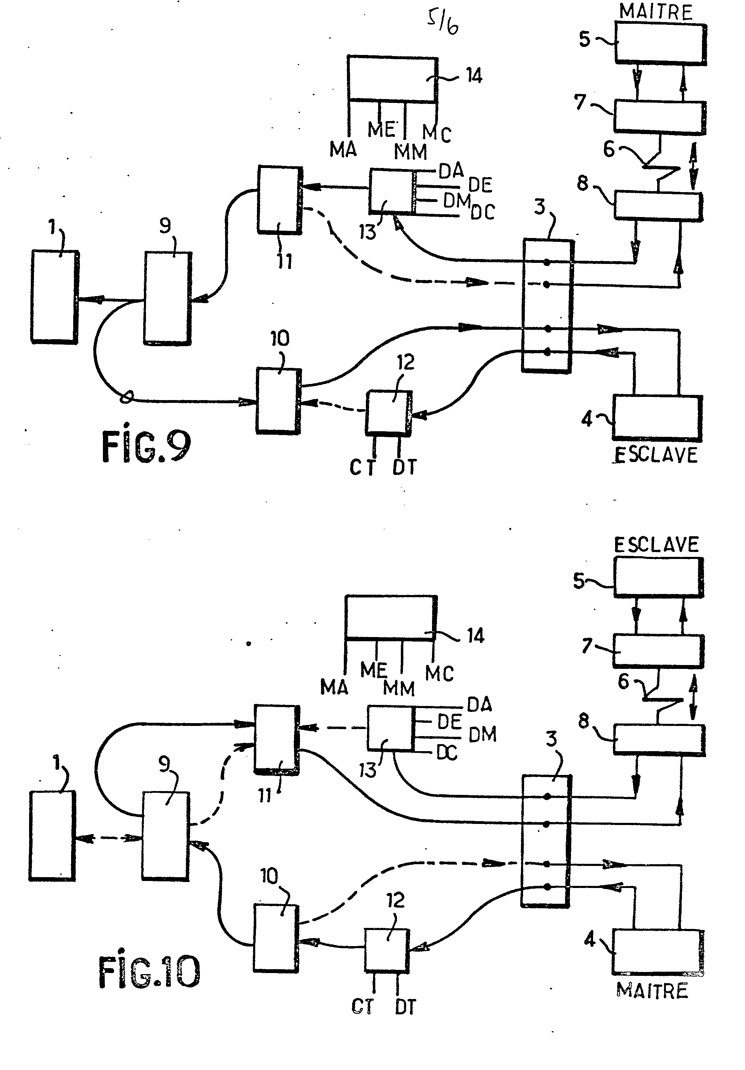

6 - MODE OU LA CONSOLE A DISTANCE EST "MAITRE" (Figures 8 et 9)

Dans ce mode, la console locale 4 est "esclave" et la console à distance 5 est "maître". Ce mode est rigoureusement symétrique au mode No. 5 : "ECOUTE" (Voir figures 8 et 9). En plus, dans ce mode l'opérateur de la console esclave 4 peut notifier à la console maître 5 qu'il souhaiterait passer au mode "conversationnel" (voir ci-après). Ceci est détecté par le dispositif 12, qui par l'intermédiaire des dispositifs 10 et 11, envoie un message "Demande de mode conversationnel" aux deux consoles 4 et 5.

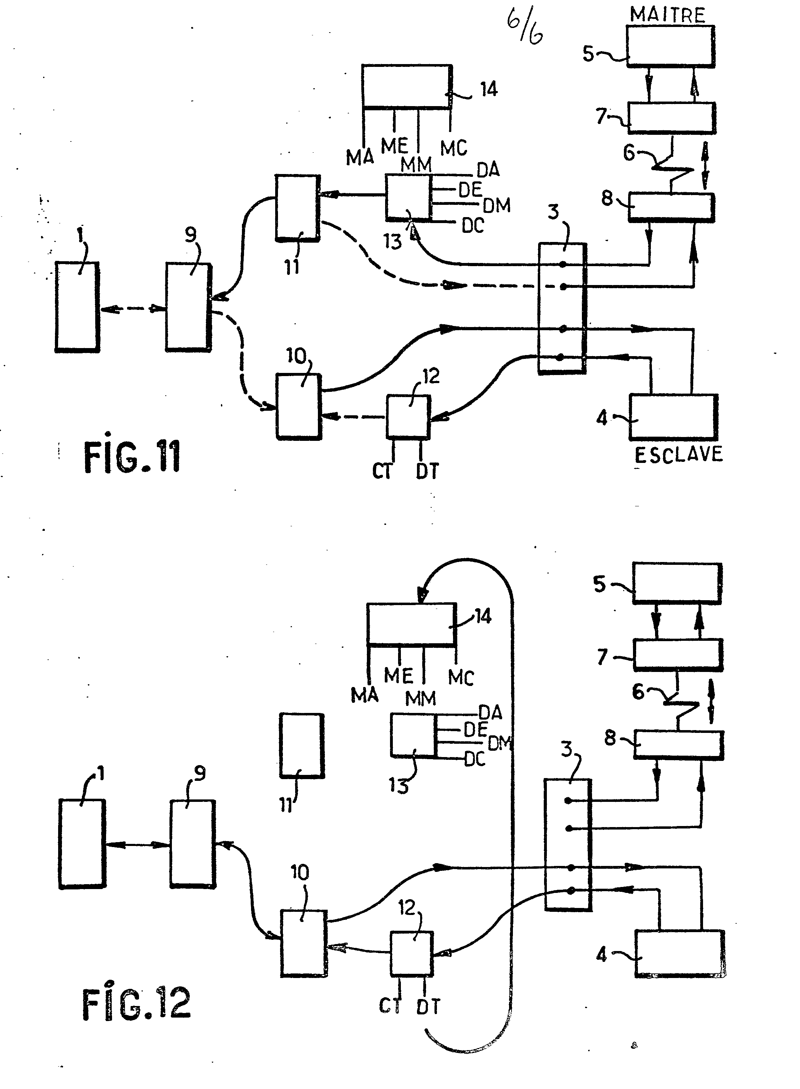

7 - MODE "CONVERSATIONNEL" (figures 10 et 11).

Dans ce mode, les deux consoles 4, 5 sont alternativement "Maître" et "Esclave". Ce mode permet un dialogue direct entre les deux consoles. Dans le cas où la console à distance est maître (figure 11), le message tapé au clavier de la console à distance 5 est rangé dans la mémoire 9 et est renvoyé à la console locale 4 par l'intermédiaire du dispositif 10, puis la console locale 4 devient "Maître".

Dans le cas où la console locale est maître (figure 10), le message tapé au clavier de la console locale 4 est rangé dans la mémoire 9 et est renvoyé à la console à distance 5 par l'intermédiaire du dispositif 11, puis la console 5 devient maître. On notera que dans ce mode, les messages ne sont pas envoyés au système 1, et que ce dernier n'en délivre pas aux consoles.

8 - <u>DECONNEXION DE LA CONSOLE A DISTANCE</u> (figure 12).

Dès que le dispositif 12 détecte une demande de déconnexion (sortie DT active), il envoie simultanément un message aux deux consoles 4, 5, indiquant la déconnexion, puis supprime les liens entre 9 et 11, 11 et 13, et les liens existants entre le dispositif adaptateur 3 et 13, 11. Le retour au mode normal (figure 1) est effectif.

REVENDICATIONS

1. Dispositif permettant d'assurer la maintenance ou télémaintenance d'un système informatique à partir d'une console locale ou à partir d'une console éloignée, le dit système comprenant au moins une unité centrale associée à des contrôleurs de périphériques pour relier des adaptateurs d'unités périphériques à la dite unité centrale, et chaque contrôleur comprenant au moins une mémoire servant au stockage momentané des informations transmises entre les adaptateurs et l'unité centrale, caractérisé par le fait qu'il comprend un dispositif de commande et d'enregistrement de changement de mode de contrôle de télémaintenance, qui est disposé entre le dispositif de mémoire et le dispositif adaptateur pour valider la décision du changement du mode de télémaintenance, avec tri des informations à distribuer entre les consoles et pour afficher en clair le mode de travail de la console maître au niveau des différentes consoles.

2. Dispositif suivant la revendication 1, caractérisé par le fait que le dispositif de commande et d'enregistrement de changement du mode de contrôle comprend des dispositifs respectifs de dialogue avec les différentes consoles, branchés entre la mémoire de messages et le dispositif adaptateur.

3. Dispositif suivant les revendications 1 et 2 prises dans leur ensemble, caractérisé par le fait qu'il est prévu un dispositif de reconnaissance d'ordres de connexion / déconnexion de la console à distance, branché entre le dispositif de dialogue avec la console locale et le dispositif adaptateur.

4. Dispositif suivant la revendication 3, caractérisé en ce qu'il comporte un dispositif permettant le changement de mode, l'affichage de messages de mode et le dialogue direct entre les consoles, dont les entrées sont reliées aux sorties du dispositif de reconnaissance d'ordres de connexion / déconnexion qui est également raccordé aux dispositifs de dialogue avec les diverses consoles.

5. Dispositif suivant la revendication 4, caractérisé par le fait qu'il comporte en outre un dispositif de reconnaissance d'ordre de changement de mode, raccordé au dispositif permettant le changement de mode, l'affichage de messages de mode et le dialogue direct entre les consoles et branché entre le dispositif de dialogue avec la console locale et le dispositif adaptateur.

6. Dispositif suivant l'une quelconque des revendications 1 à 5, caractérisé par le fait que la console à distance est reliée au dispositif adaptateur par l'intermédiaire d'une ligne téléphonique et de modulateurs-démodulateurs (modems) appropriés.

7. Dispositif suivant l'une quelconque des revendications 1 à 7, caractérisé par le fait que le dispositif adaptateur est conçu de manière à permettre le passage d'une interface de liaison en parallèle à une interface de liaison série, du type interface CCITT.

1/6

FIG.1

FIG.2

2/6

0031782

FIG.3

FIG.4

FIG.5

FIG.6

FIG.7

FIG.8

0031782

FIG.9

FIG.10

FIG.11

FIG.12

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | US - A - 4 030 072 (BJORNSSON)<br>* Colonne 3, ligne 59 à colonne 4, ligne 48 et 55-61; colonne 6, lignes 4-10; colonne 14, ligne 22 à colonne 15, ligne 35; colonne 17, lignes 10-50; colonne 19, lignes 18-22; colonne 21, lignes 27-30; 60-65; colonne 24, lignes 8-21; figures 1,2 * | 1,2,<br>6,7 | G 06 F 11/22 |
| | -- | | |
| | FR - A - 2 357 124 (BROSSERON)<br>* Page 2, ligne 6 à page 4, ligne 36; page 5, lignes 11-14; page 7, ligne 34 à page 11, ligne 13; figures * | 1,3-5 | **DOMAINES TECHNIQUES RECHERCHES (Int. Cl. ³)**<br><br>G 06 F 11/22<br>11/26<br>H 04 Q 1/26 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 17-03-1981 | GUIVOL |

OEB Form 1503.1  06.78